(19) **Europäisches Patentamt**
**European Patent Office**
**Office européen des brevets**

(11) **EP 3 098 575 B1**

(12) **EUROPEAN PATENT SPECIFICATION**

(45) Date of publication and mention
of the grant of the patent:
**25.07.2018 Bulletin 2018/30**

(51) Int Cl.:
***G01F 15/02*** *(2006.01)*      ***G01K 17/10*** *(2006.01)*
***G01K 15/00*** *(2006.01)*      *G01F 15/06* *(2006.01)*

(21) Application number: **16171144.5**

(22) Date of filing: **24.05.2016**

(54) **HOT WATER METER AND MEASURING METHOD THEREOF**

HEISSWASSERMESSER UND MESSVERFAHREN DAFÜR

COMPTEUR D'EAU CHAUDE ET SON PROCÉDÉ DE MESURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.05.2015 KR 20150072954**

(43) Date of publication of application:
**30.11.2016 Bulletin 2016/48**

(73) Proprietors:
• **Korea Institute of Energy Research
Daejon 305-343 (KR)**
• **Korea District Heating Corporation
Seongnam-si, Gyeonggi-do
463-908 Korea (KR)**

(72) Inventors:
• **LEE, Jae Yong
305-343 Daejeon (KR)**
• **IM, Yong Hoon
305-343 Daejeon (KR)**

(74) Representative: **Brevalex
95, rue d'Amsterdam
75378 Paris Cedex 8 (FR)**

(56) References cited:
**DE-A1- 4 132 399      DE-A1- 19 640 900
US-A- 4 591 988      US-A- 5 153 837**

Description

BACKGROUND OF THE INVENTION

Field of the Invention

The present invention relates to a hot water supply system of an apartment house in which raw water is heated by a heat exchanger to produce warm water and then supply the warm water to individual households.

Description of the Related Art

A hot water supply system, in which warm water is produced by a heat exchanger or a boiler device disposed in a central machine room and then is uniformly supplied through pipes, is referred to as a central hot water supply system. In such central hot water supply system, it is important to exactly measure the amount of the hot water used by individual households.

Accordingly, hot water meters have been installed in the individual households using the central hot water system, and such hot water meters often measure only flow rate of the hot water.

Warm water, which is produced and supplied by the central machine room, has a gradual decrease tendency in temperature in the course of flowing through pipes. Consequently, an individual household, which is supplied with the hot water at a position near to a supply-side pipe of the central machine room, is supplied with the hot water having higher temperature so that the individual household can be supplied with sufficient heat by just a little hot water. On the other hand, an individual household, which is supplied with the hot water at a position remote from a supply-side pipe of the central machine room, is supplied with the hot water having lower temperature so that the individual household have to need much hot water in order to be supplied with sufficient heat.

In this situation, hot water heat usage of an individual household is measured by using only hot water flow rate like a conventional hot water meter, which causes a problem that one household is measured to use much hot water heat and the other household is measured to use less hot water heat in spite of supplying the same heat.

In order to solve the problem of the conventional hot water meter, it is necessary for a hot water meter to calculate the amount of heating value of the hot water instead of the flow rate of the hot water.

The amount of the heating value of the hot water is calculated by multiplying temperature difference between a temperature of raw water used to produce the warm water in the central machine room and a temperature of the hot water entering into an individual household by a flow rate of the hot water.

Korean Patent Registration No. 10-1301687 discloses a system in which a heating value of hot water is calculated by using a temperature of raw water, a temperature of the hot water, and a flow rate of the hot water. Looking into the system, a hot water meter installed in each individual household measures not only the flow rate but also the temperature of the hot water and transmits such measurement value to a central measuring device . The central measuring device receives the flow rate and the temperature of the hot water from the hot water meter and calculates the heating value of the individual household by using a temperature of the raw water which the central measuring device measures by itself.

According to the system disclosed in the Korean Patent Registration No. 10-1301687, it is possible to resolve a problem that the amount of hot water heat usage is differently measured according to a position of an individual household in spite of using the same heat. But because the system receives the flow rate and the temperature of the hot water to calculate the heating value of the how water from the hot water meter, when the central measuring device is cut off from the hot water meter in a network, a new problem that the central measuring device can never calculate the heating value of the hot water occurs. The document DE4132399 discloses a hot water meter.

From the view that it is impossible to charge corresponding individual household for usage of the hot water when the heating value of the hot water cannot be calculated due to cut off of the network, the system disclosed in the Korean Patent Registration No. 10-1301687 also needs to be improved.

SUMMARY OF THE INVENTION

Accordingly, the present invention is made in consideration of the above-mentioned circumstances, and an object of an aspect thereof is to provide a hot water meter capable of exactly measuring the amount of hot water usage regardless of position of each individual household and a system thereof.

An object of another aspect of the present invention is to provide a hot water meter capable of stably measuring the amount of hot water usage in spite of unstable network circumstances and a system thereof.

In order to achieve the above-mentioned objects, as an aspect, the present invention provides a hot water meter installed in each individual household in a central hot water system which produces warm water by heating raw water with a heat exchanger and supplies the warm water to the each individual household, the hot water meter comprising a raw water temperature receiving unit that receives a measurement value of a temperature of the raw water via communication with a raw water temperature measuring unit measuring the temperature of the raw water supplied to the heat exchanger; a raw water temperature estimating unit that stores a record of the temperature of the raw water or timed raw water temperature data and estimates the temperature of the raw water by using the record of the temperature of the raw water or the timed raw water temperature data; a hot water flow rate measuring unit that measures a flow rate of the hot water flowing through the hot water meter; a hot water temperature measuring unit that measures a temperature of the hot water; and a hot water heating value calculating unit that calculates a heating value of the hot water by multiplying a difference value between the temperature of the hot water and the temperature of the raw water by the flow rate of the hot water, wherein, when the raw water temperature receiving unit fails to receive the measurement value of the temperature of the raw water, the hot water heating value calculating unit calculates the heating value of the hot water by using an estimation value of the temperature of the raw water estimated by the raw water temperature estimating unit.

In another aspect, the present invention provides a measuring method of a hot water meter installed in each individual household in a central hot water system which produces hot water by heating raw water with a heat exchanger and supplies the hot water to the each individual household, the measuring method comprising: receiving a measurement value of a temperature of the raw water (hereinafter, referred to as a raw water temperature) from a raw water temperature measuring unit measuring the temperature of the raw water and storing the measurement value of the temperature of the raw water as a first variable; measuring a temperature of the hot water (hereinafter, referred to as a hot water temperature) flowing through the hot water meter and storing the temperature of the hot water as a second variable; measuring a flow rate of the hot water (hereinafter, referred to as a hot water flow rate) and storing the flow rate of the hot water as a third variable; and calculating a heating value of the hot water by multiplying a difference value between the first variable and the second variable by the third variable, wherein the hot water meter further comprises a raw water temperature estimating unit adapted for estimating the temperature of the raw water by using a record of the temperature of the raw water stored according to the measurement value of the temperature of the raw water which is received; and wherein, when the raw water temperature receiving unit fails to receive the measurement value of the temperature of the raw water, the hot water heating value is calculated by multiplying a difference value between the measurement value and the third variable by the third variable.

This measuring method further comprises, when the first variable is not updated for a time, receiving a measurement value of the temperature of the raw water by communicating with a hot water meter of another individual household and storing the measurement value of the temperature of the raw water as the first variable.

This measuring method further comprises receiving a measurement value of the temperature of the raw water from a hot water meter of another individual household, storing the measurement value of the temperature of the raw water as a fourth variable, and determining whether the hot water meter is abnormal or not by comparing the first variable with the fourth variable.

In this measuring method, when the hot water meter is determined to be abnormal in the step of determining whether the hot water meter is abnormal or not, the heating value of the hot water is calculated by replacing the first variable with the fourth variable in the step of calculating the heating value of the hot water.

As described above, according to the present invention, it is possible to exactly measure the amount of hot water usage regardless of a position of each individual household and stably measure the amount of the hot water usage in spite of unstable network circumstances.


**BRIEF DESCRIPTION OF THE DRAWINGS**

The above and other aspects, features and other advantages of the present invention will be more clearly understood from the following detailed description taken in conjunction with the accompanying drawings, in which:

FIG. 1 is a diagram illustrating a configuration of a hot water meter according to a first embodiment;
FIG. 2 is a diagram schematically illustrating a central hot water supply system to which the hot water meter according to the first embodiment is applied;
FIG. 3 is a diagram illustrating a network relationship between the hot water meter according to the first embodiment and peripheral devices thereof;
FIG. 4 is a diagram illustrating a first exemplary path in which a measurement value of a temperature of a raw water and an estimation value of the temperature of the raw water are transmitted in the first embodiment;
FIG. 5 is a diagram illustrating a second exemplary path in which the measurement value of the temperature of the raw water and the estimation value of the temperature of the raw water are transmitted in the first embodiment;
FIG. 6 is a diagram illustrating the hot water meter further comprising an error checking unit;
FIG. 7 is a flowchart illustrating a measuring method of a hot water meter according to a second embodiment;
FIG. 8 is a flowchart illustrating a measuring method of a hot water meter according to a third embodiment;

FIG. 9 is a diagram illustrating a hot water management server according to a fourth embodiment and data flows among the hot water management server and the peripheral devices; and

FIG. 10 is a diagram illustrating a configuration of a hot water meter according to a fifth embodiment.

## DETAILED DESCRIPTION OF THE PREFERRED EMBODIMENT

Hereinafter, some embodiments of the present invention will be described in detail with reference to the accompanying drawings. In describing the invention with reference to the accompanying drawings, like elements are referenced by like reference numerals or signs regardless of the drawing numbers. When it is determined that detailed description of known techniques involved in the invention makes the gist of the invention obscure, the detailed description thereof will not be made.

Terms such as first, second, A, B, (a), and (b) can be used to describe elements of the invention. These terms are merely used to distinguish one element from another element and the essence, order, sequence, number, or the like of the elements is not limited to the terms. If it is mentioned that an element is "coupled" or "connected" to another element, it should be understood that the element is directly coupled or connected to another element or still another element is "interposed" therebetween or the elements may be "coupled" or "connected" to each other with still another element interposed therebetween.

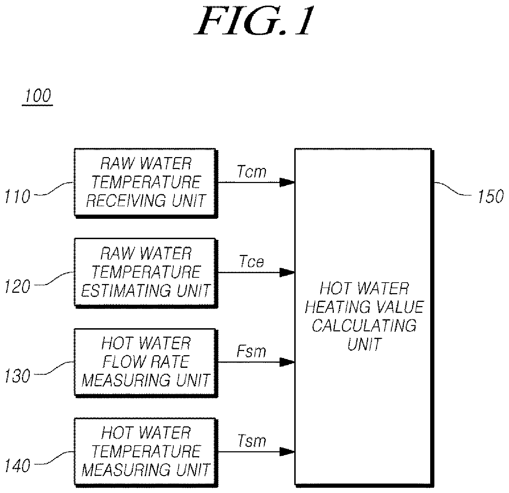

FIG. 1 is a diagram illustrating a configuration of a hot water meter according to a first embodiment.

Referring to FIG. 1, a hot water meter 100 includes a raw water temperature receiving unit 110, a raw water temperature estimating unit 120, a hot water flow rate measuring unit 130, a hot water temperature measuring unit 140, a hot water heating value calculating unit 150, and the like.

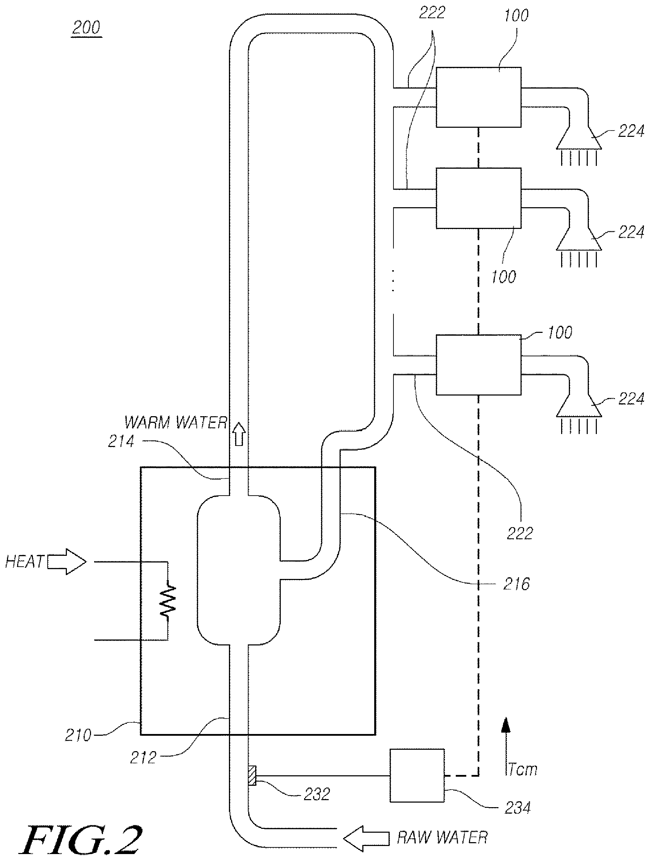

The raw water temperature receiving unit 110 receives a measurement value Tcm of a temperature of raw water (hereinafter, referred to as a raw water temperature) from a raw water temperature measuring device (referring to 234 of FIG. 2) that measures the raw water temperature.

The raw water temperature estimating unit 120 stores a raw water temperature record or timed raw water temperature data and estimates the raw water temperature by using the raw water temperature record or the timed raw water temperature data.

The hot water flow rate measuring unit 130 measures a flow rate of hot water (hereinafter, referred to as a hot water flow rate) flowing through the hot water meter 100.

The hot water temperature measuring unit 140 measures a temperature of the hot water (hereinafter, referred to as a hot water temperature).

The measurement value Tcm of the raw water temperature received by the raw water temperature receiving unit 110, An estimation value Tce of the raw water temperature generated by the raw water temperature estimating unit 120, a measurement value Fsm of the hot water flow rate measured by the hot water flow rate measuring unit 130, and a measurement value Tsm of the hot water temperature measured by the hot water temperature measuring unit 140 are transmitted to the hot water heating value calculating unit 150.

The hot water heating value calculating unit 150 calculates a hot water heating value by using these four values Tcm, Tce, Fsm, and Tsm.

$$[\text{Mathematical Equation 1}]$$

$$Qs = (Tsm - Tcm) \times Fsm$$

According to the mathematical equation 1, the hot water heating value calculating unit 150 calculates the hot water heating value Qs by multiplying a difference value between the measurement value Tsm of the hot water temperature and the measurement value Tcm of the raw water temperature by the measurement value Fsm of the hot water flow rate.

The raw water temperature receiving unit 110 receives the measurement value Tcm of the raw water temperature from the raw water temperature measuring device (referring to 234 of FIG. 2) . When the raw water temperature receiving unit 110 fails to receive the measurement value Tcm of the raw water temperature from the raw water temperature measuring device (referring to 234 of FIG. 2), the hot water heating value calculating unit 150 calculates the hot water heating value Qs by using the estimation value Tce of the raw water temperature instead of the measurement value Tcm of the raw water temperature.

[Mathematical Equation 2]

$$Qs = (Tsm - Tce) \times Fsm$$

According to the mathematical equation 2, the hot water heating value calculating unit 150 calculates the hot water heating value Qs by multiplying a difference value between the measurement value Tsm of the hot water temperature and the estimation value Tce of the raw water temperature by the measurement value Fsm of the hot water flow rate.

FIG. 2 is a diagram schematically illustrating a central hot water supply system to which the hot water meter according to the first embodiment is applied;

According to FIG. 2, a central hot water supply system 200 heats raw water by means of a heat exchanger 210 to produce warm water. The heat exchanger 210 is supplied with heat from the outside, and heats the raw water by using such heat to produce the warm water.

Three pipes of a raw water pipe 212, a supply pipe 214, and a return pipe 216 are connected to the heat exchanger 210.

In the raw water pipe 212 through which the raw water is supplied, a temperature sensor 232 is attached to the raw water pipe 212 and a raw water temperature measuring device 234 is connected to the temperature sensor 232. The raw water temperature measuring device 234 measures a temperature of the raw water by means of the temperature sensor 232 attached to the raw water pipe 212, and transmits a measurement value Tcm of the raw water temperature measured in this manner via communication line (wired or wireless) to the hot water meter 100 installed in each individual household.

While heated warm water flows through the supply pipe 214, the warm water reaches to a hot water consuming device 224 via a hot water pipe 222 of an individual household.

The hot water meter 100 is positioned between the hot water pipe 222 and the hot water consuming device 224 and measures the hot water heating value of the hot water to be supplied via the hot water pipe 222. In order to measure the hot water heating value, the hot water meter 100 has to know flow rate and a temperature of the hot water supplied through the hot water pipe 222, and the temperature of the raw water used in the heat exchanger 210. Therefore, the hot water meter 100 receives the measurement value Tcm of the raw water from the raw water temperature measuring device 234, and directly measures the flow rate and the temperature of the hot water to be supplied via the hot water pipe 222.

In the warm water supplied via the supply pipe 214, warm water which does not flow to the hot water pipes 222 of individual households returns to the heat exchanger 210 via the return pipe 216.

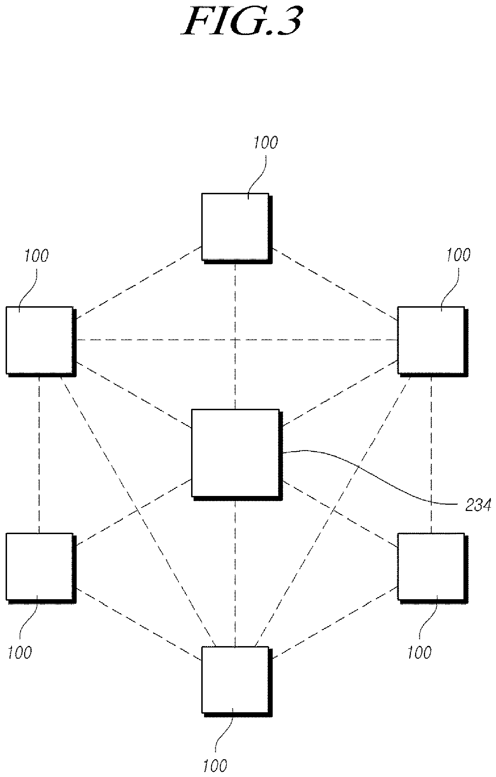

FIG. 3 is a diagram illustrating a network relationship between the hot water meter according to the first embodiment and peripheral devices thereof.

Referring to FIG. 3, hot water meters 100 build communication with not only the raw water temperature measuring device 234 but also hot water meters 100 each other to exchange data. The communication lines may be wired or wireless. For example, the hot water meter 100 and the raw water temperature measuring device 234 interchange data via power line communication . The hot water meters 100 are wirelessly wired to each other via zigbee communication. The wired and the wireless all have merits and demerits. The wired has merits that stable and fast data interchange can be enabled, and the wireless has merits that data can be interchanged without separate communication line.

Referring to FIG. 1, the raw water temperature receiving unit 110 receives the measurement value Tcm of the raw water temperature from the raw water temperature measuring device 234, but also receive the measurement value Tcm of the raw water temperature from the hot water meter 100 of another individual household via a network structure such as FIG. 3.

For example, when the hot water meters 100 which are adjacent to each other interchange data via the zigbee communication, the raw water temperature receiving unit 110 can receive the measurement value Tcm of the raw water temperature that an adjacent hot water meter receives. As a result, even in case where the raw water temperature receiving unit 110 does not receive the measurement value Tcm of the raw water temperature due to cut off of a network related to the raw water temperature measuring device 234, the measurement value Tcm of the raw water temperature can be obtained via a hot water meter of adj acent another individual household.

In FIG. 3, when a method in which the hot water meter 100 communicates with the raw water temperature measuring device 234 is configured to be different from a method in which the hot water meter 100 communicates with hot water meters of the other individual households, effects of the above-mentioned example can be further maximized. For example, when the hot water meter 100 is configured to exchange data with the raw water temperature measuring device 234 via the power line communication and to exchange data with the hot water meters of the other individual households via the zigbee communication, the hot water meter 100 can receive the measurement value Tcm of the raw water temperature via a zigbee communication module even in case of a break of a power line communication modem. Like this, when the raw water temperature receiving unit 110 of the hot water meter 100 fails to communicate with the raw water temperature measuring device 234, the raw water temperature receiving unit 110 attempts to communicate with the hot water meters of another individual households to receive the measurement value Tcm of the raw water temperature which the hot water meter of another individual household received.

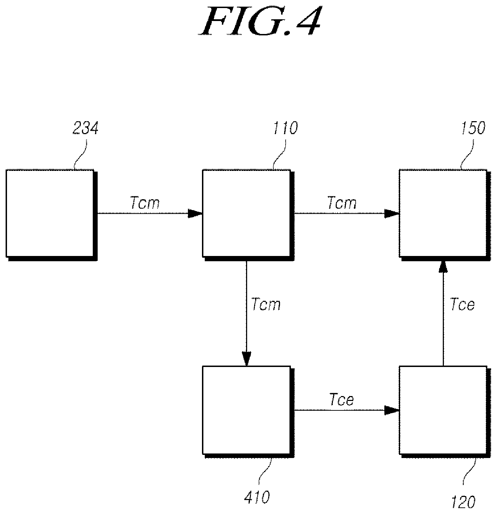

FIG. 4 is a diagram illustrating a first exemplary path in which a measurement value of the raw water temperature and an estimation value of the raw water temperature are transmitted in the first embodiment.

The hot water heating value calculating unit 150 receives the measurement value Tcm of the raw water temperature from the raw water temperature receiving unit 110 to use for calculation of the hot water heating value. Further, the hot water heating value calculating unit 150 receives the estimation value Tce of the raw water temperature from the raw water temperature estimating unit 120 to use for calculation of the hot water heating value.

Referring to FIG. 4, the raw water temperature receiving unit 110 receives the measurement value Tcm of the raw water temperature from the raw water temperature measuring device 234, and then transmits the measurement value Tcm of the raw water temperature to the hot water heating value calculating unit 150. Further, the raw water temperature receiving unit 110 stores the measurement value Tcm of the raw water temperature in a first memory 410 in which a raw water temperature record is stored, the measurement value Tcm of the raw water temperature being received from the raw water temperature measuring device 234.

The raw water temperature estimating unit 120 calculates an estimation value Tce of the raw water temperature by using the raw water temperature record stored in the first memory 410, and transmits the estimation value Tce of the raw water temperature to the hot water heating value calculating unit 150.

In the raw water temperature record, time and raw water temperature value are stored at the same time. The raw water temperature receiving unit 110 receives the measurement value Tcm of the raw water temperature measuring device 234, and stores reception time and a reception value in the raw water temperature record.

The raw water temperature estimating unit 120 checks the reception time and the reception value stored in the raw water temperature record, estimates that a raw water temperature value which is lately received is a raw water temperature, and generates the raw water temperature as the estimation value Tce of the raw water temperature.

The raw water temperature estimating unit 120 checks the reception time stored in the raw water temperature record, and may not estimate the raw water temperature from reception values stored in the raw water temperature record when all the reception values are received before a time. That is, the raw water temperature estimating unit 120 checks the reception time stored in the raw water temperature record, and estimates the raw water temperature from the reception values received in a time.

The raw water temperature record includes a specific variable, and the raw water temperature receiving unit 110 stores the measurement value Tcm of the raw water temperature, which is received from the raw water temperature estimating device 234, in the specific variable. The raw water temperature estimating unit 120 generates a value stored in the specific variable as the estimation value Tce of the raw water temperature and transmits the estimation value Tce of the raw water temperature to the hot water heating value calculating unit 150.

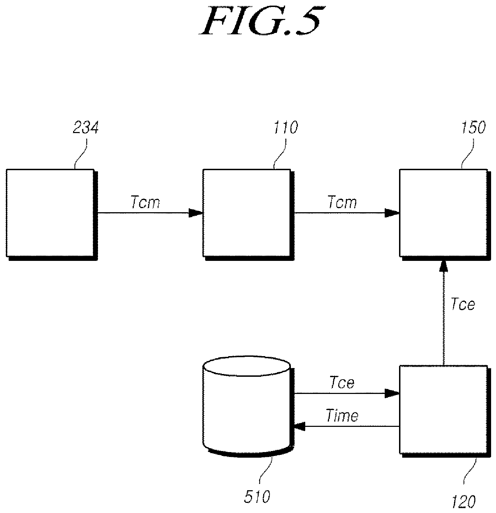

FIG. 5 is a diagram illustrating a second exemplary path in which the measurement value of the raw water temperature and the estimation value of the raw water temperature are transmitted in the first embodiment.

Referring to FIG. 5, the hot water heating value calculating unit 150 receives the measurement value Tcm of the raw water temperature from the raw water temperature receiving unit 110 to use for calculation of the hot water heating value. Further, the hot water heating value calculating unit 150 receives the estimation value Tce of the raw water temperature from the raw water temperature estimating unit 120 to use for calculation of the hot water heating value.

The raw water temperature receiving unit 110 receives the measurement value Tcm of the raw water temperature from the raw water temperature measuring device 234, and then transmits the measurement value Tcm of the raw water temperature to the hot water heating value calculating unit 150.

Referring to FIG. 5, the hot water meter 100 further includes a second memory 510 and stores timed raw water temperature data in the second memory 510. The raw water temperature estimating unit 120 estimates the raw water temperature by using the timed raw water temperature data stored in the second memory 510 and transmits the estimation value Tce of the raw water temperature to the hot water heating value calculating unit 150.

The timed raw water temperature data gather raw water temperature data of 24 hours. For example, the timed raw water temperature data gather the raw water temperature value by hour for 24 hours. In this case, the raw water temperature estimating unit 120 checks current time, and extracts a raw water temperature value corresponding to the current time in the timed raw water temperature data to generate the estimation value Tce of the raw water temperature.

The timed raw water temperature data gather daily and timed raw water temperature data of not less than a year. For example, the timed raw water temperature data gather the raw water temperature value on a daily and hourly basis for a year. In this case, the raw water temperature estimating unit 120 checks current time (data and hour information at present time) at which the raw water temperature is estimated, and extracts a raw water temperature value corresponding to the current time in the timed raw water temperature data to generate the estimation value Tce of the raw water temperature.

The hot water meter 100 includes all of the first memory 410 of FIG. 4 and the second memory 510 of FIG. 5, and stores the raw water temperature record and the timed raw water temperature data in each memory.

In this embodiment, when the raw water temperature receiving unit 110 fails to receive the measurement value Tcm of the raw water temperature in an hour, the raw water temperature estimating unit 120 estimates the raw water temperature by using the raw water temperature record. When the raw water temperature receiving unit 110 fails to receive the measurement value Tcm of the raw water temperature after an hour elapse, the raw water temperature estimating unit 120 estimates the raw water temperature by using the timed raw water temperature data.

When succeeding in receiving the raw water temperature measuring value Tcm, the raw water temperature receiving unit 110 stores the measurement value Tcm of the raw water temperature in the raw water temperature record. When the raw water temperature receiving unit 110 fails to receive the measurement value Tcm of the raw water temperature in an hour from a current time, the raw water temperature estimating unit 120 estimates the raw water temperature by using the measurement value Tcm of the raw water temperature lately stored in the raw water temperature record.

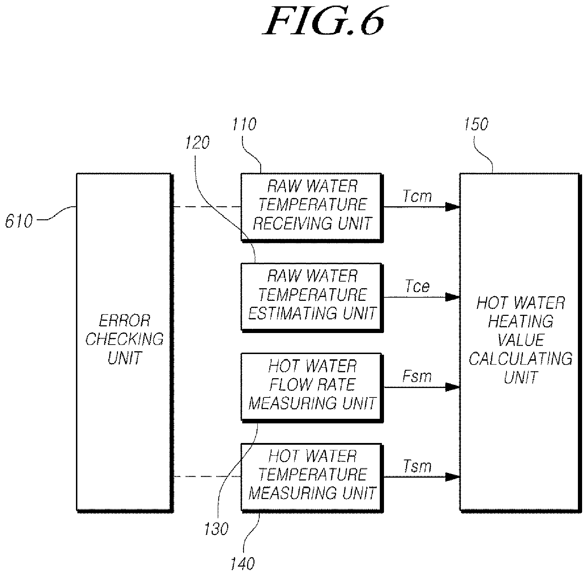

FIG. 6 is a diagram illustrating the hot water meter further comprising an error checking unit.

Referring to FIG. 6, the hot water meter 100 further includes an error checking unit 610, and determines whether the raw water temperature receiving unit 110 and the hot water temperature measuring unit 40 are abnormal or not by using the error checking unit 610.

Referring to FIG. 3 again, data are interchanged not only between the hot water meter 100 and the raw water temperature measuring device 234 but also between the hot water meter 100 and a hot water meter of another individual household. Accordingly, the raw water temperature receiving unit 110 receives not only the measurement value of the raw water temperature from the raw water temperature measuring device 234 but also the measurement value of the raw water temperature received by the hot water meter of another individual household.

When the raw water temperature receiving unit 110 receives the measurement value of the raw water temperature from the raw water temperature measuring device 234 and also receives the measurement value of the raw water temperature received by the hot water meter of another individual household, the error checking unit 610 determines whether the raw water temperature receiving unit 110 is abnormal or not by comparing the measurement value of the raw water temperature received from the raw water temperature measuring device with the measurement value of the raw water temperature transmitted by the hot water meter of another individual household.

For example, when a difference between the measurement value of the raw water temperature received from the raw water temperature measuring device 234 and the measurement value of the raw water temperature transmitted by the hot water meter of another individual household is over a range, the error checking unit 610 determines whether the raw water temperature receiving unit 110 is abnormal or not.

As described with reference to FIG. 3, the raw water temperature receiving unit 110 communicates with the raw water temperature measuring device 234 and the hot water meter of another individual household through different communication methods. When there is a difference between two measurement values of the raw water temperature obtained through different communication methods, abnormality is likely to happen in one of two communication methods. As described above, in order to check such abnormal situation, the error checking unit 610 checks an error by using the difference between a measurement value of the raw water temperature received from the raw water temperature measuring device 234 and a measurement value of the raw water temperature received from the hot water meter of another individual household to check an error.

When the error checking unit 610 determines that abnormality happens in the raw water temperature receiving unit 110, the hot water heating value calculating unit 150 calculates the hot water heating value by using an estimation value Tce of the raw water temperature estimated by the raw water temperature estimating unit 120.

Referring to FIG. 2 again, a temperature sensor 232 is attached to a raw water pipe 212, and the raw water temperature measuring device 234 measures the raw water temperature by using the temperature sensor 232. Not shown in FIG. 2, a temperature sensor (not shown) may be attached to the supply pipe 214 or the return pipe 216. A warm water temperature measuring device (not shown) which measures a temperature of supply warm water flowing out through the supply pipe 214 from the temperature sensor (not shown) attached to the supply pipe 214 or the return pipe 216, or measures a temperature of return warm water flowing in through the return pipe 216 may be further included in the central hot water supply system 200.

The hot water meter 100 further includes a warm water temperature receiving section (not shown) receiving measurement value of the supply warm water temperature or the return warm water temperature from the warm water temperature measuring section (not shown). The error check 610 determines whether the hot water temperature measuring unit 140 is abnormal or not by comparing the supply warm water temperature or the return warm water temperature with the hot water temperature Tsm measured by the hot water temperature measuring unit 140.

There is a difference between the supply warm water temperature and the hot water temperature according to a position of an individual household. But, when such difference is over a range, there is high probability that the pipe will have a problem or the hot water temperature measuring unit 140 will be abnormal. Accordingly, when a difference between the supply warm water temperature or the return water temperature and the hot water temperature Tsm measured by the hot water temperature measuring unit 140 is over a range, the error checking unit 610 determines that the hot water temperature measuring unit 140 is abnormal.

The warm water temperature measuring device (not shown) measures all of the supply warm water temperature and the return water temperature. In this time, when the warm water temperature measuring device (not shown) receives all of two measurement values of the hot water temperature, the error checking unit 610 determines whether the hot water temperature measuring unit 140 by comparing the supply warm water temperature and the return water temperature and the hot water temperature Tsm measured by the hot water temperature measuring nit 140

For example, the hot water temperature has to have a value in a range between the supply warm water temperature and the return warm water temperature. Taking measurement error into consideration, the hot water temperature has to belong to a range between a value obtained by adding a first error range to the supply warm water temperature and a value obtained by subtracting a second error range from the return warm water temperature . Accordingly, when the hot water temperature Tsm is out of the range between a value obtained by adding the first error range to the supply warm water temperature and a value obtained by subtracting the second error range from the return warm water temperature, the error checking unit 610 determines that the hot water temperature measuring unit 140 is abnormal.

When it is determined that the hot water temperature measuring unit 140 is abnormal, the hot water heating value calculating unit 150 estimates the hot water temperature by using the supply warm water temperature or the return warm water temperature received by the warm water temperature receiving section (not shown). For example, the hot water heating value calculating unit 150 estimates the supply warm water temperature as the hot water temperature as it is or estimates an average value of the supply warm water temperature and the return warm water temperature as the hot water temperature. The hot water heating value calculating unit 150 calculates the how water heating value by using the estimated hot water temperature.

When it is determined that the hot water temperature measuring unit 140 is abnormal, the hot water heating value calculating unit 150 receives the measurement value of the hot water temperature from a hot water meter of another individual household and calculates the hot water heating value by using the received hot water temperature.

The hot water meter 100 further includes a hot water temperature receiving unit (not shown) that receives a measurement value of the hot water temperature of a hot water meter of another individual household. The error checking unit 610 determines whether the hot water temperature measuring unit 140 is abnormal or not by comparing the measurement value of the hot water temperature of the hot water meter of another individual household with the measurement value Tsm of the hot water temperature of the hot water temperature measuring unit 140.

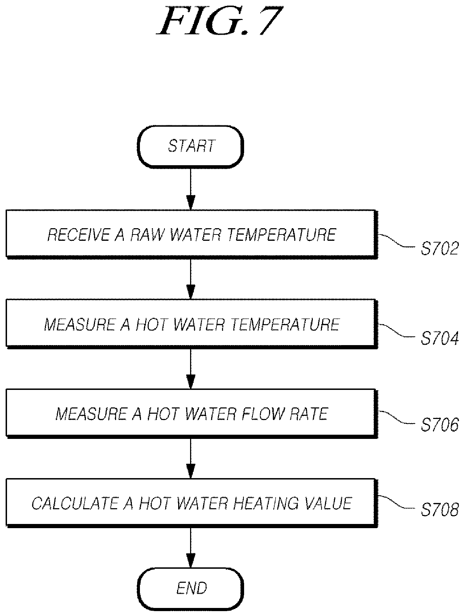

FIG. 7 is a flowchart illustrating a measuring method of a hot water meter according to a second embodiment.

Referring to FIG. 7, a hot water meter receives a measurement value of a raw water temperature from the raw water temperature measuring device (234 of FIG. 2), stores the measurement value of the raw water temperature as a first variable (S702), measures a temperature of hot water flowing through the hot water meter, stores the temperature of the hot water as a second variable (S704), measures a flow rate of the hot water, and stores the hot water flow rate as a third variable (S706).

The hot water meter calculates hot water heating value by multiplying a difference between the first variable and the second variable by the third variable.

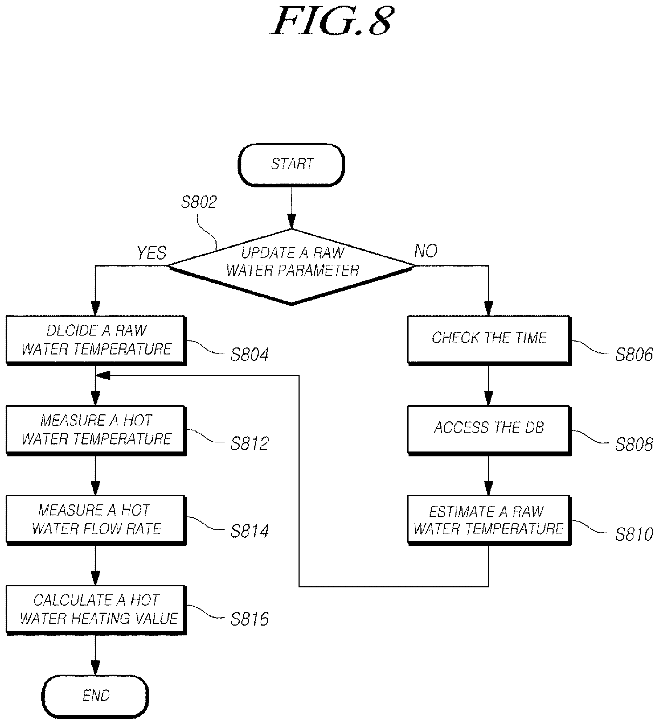

FIG. 8 is a flowchart illustrating a measuring method of a hot water meter according to a third embodiment.

Referring to FIG. 8, a hot water meter determines whether a raw water temperature is received from the raw water temperature measuring device (234 of FIG. 2) (S802).

When the hot water meter receives the raw water temperature from the raw water temperature measuring device (234 of FIG. 2), a raw water temperature variable is updated. When the hot water meter receives the raw water temperature so that the raw water temperature variable is updated (YES of S802), the received value is decided as the raw water temperature (S804).

On the contrary, when the hot water meter does not receive the raw water temperature so that the raw water temperature variable is not updated for a time (NO of S802), the hot water meter checks a current time (S806) and extracts a raw water temperature value corresponding to the current time by applying the current time to timed raw water temperature data stored in database (S808). Not shown in FIG. 8, before the step S802, a step of storing the timed raw water temperature data in the database (not shown) is further performed by the hot water meter.

When the raw water temperature is extracted from the timed raw water temperature data, the hot water meter estimated the raw water temperature by using the corresponding value and stores a raw water temperature estimation value in a raw water temperature estimation value variable (S810).

The hot water meter measures a temperature of the hot water flowing through the hot water meter, stores the hot water temperature in a hot water temperature value variable (S812), measures a flow rate of the hot water, and stores the hot water flow rate in a hot water flow rate variable (S814).

When it is determined that the raw water temperature variable is updated in the step S802, the hot water meter calculates the how water heating value by multiplying a difference value between a value stored in the raw water temperature variable and a value stored in the hot water temperature value variable by a value stored in the hot water flow rate variable. On the contrary, when it is determined that the raw water temperature variable is not updated for a time in the step S802, the hot water meter calculates the how water heating value by multiplying a difference value between a value stored in the raw water temperature estimation value variable and a value stored in the hot water temperature value variable by a value stored in the hot water flow rate variable .

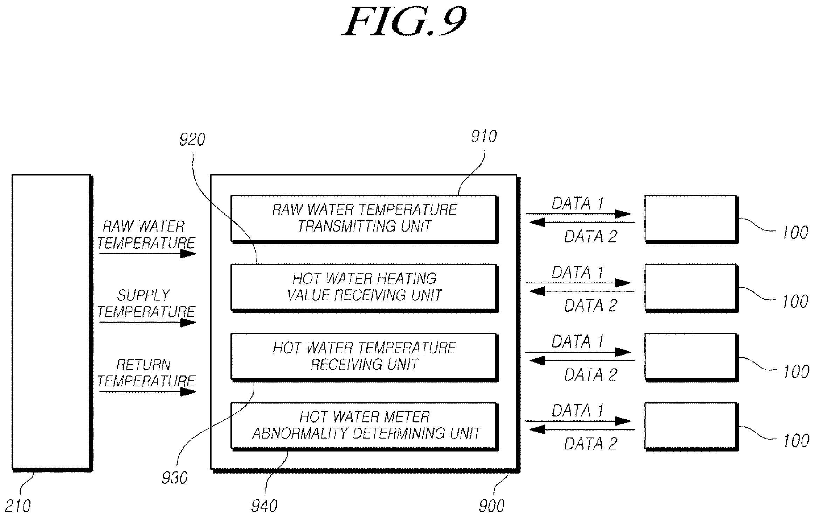

FIG. 9 is a diagram illustrating a hot water management server according to a fourth embodiment and data flows among the hot water management server and the peripheral devices.

The central hot water management server includes a hot water management server 900 managing hot water meters 100. The hot water management server 900 obtains remotely a calculation value of a hot water heating value by exchanging data (DATA1 and DATA2) with the hot water meters 100, determines whether the hot water meter 100 is abnormal or not, and transmits information (for example, a raw water temperature measurement value) which the hot water meters 100 need.

The hot water management server 900 includes a raw water temperature transmitting unit 910, a hot water heating value receiving unit 920, a hot water temperature receiving unit 930, and a hot water meter abnormality determining unit 940.

The hot water management server 900 measures a raw water temperature, a supply temperature, and a return temperature by attaching the temperature sensor (232 of FIG. 2) to the heat exchanger 210.

The raw water temperature transmitting unit 910 transmits a measured raw water temperature to the hot water meters 100. According to the first embodiment, the hot water meters 100 receive the raw water measurement value from the outside, that is, receives the raw water temperature measurement value by communicating with the hot water management server 900.

The hot water meters 100 calculate the hot water heating value by using the received raw water temperature measurement value, so that the hot water heating value receiving unit 920 receives the calculation value of the hot water heating value calculated by the hot water meters 100. According to embodiments, the hot water management server 900 displays or prints the received calculation value of the hot water heating value to support a manager in charging individual households.

The hot water temperature receiving unit 930 receives the hot water temperature from the hot water meters 100. The hot water meter abnormality determining unit 940 determines whether the hot water meters 100 are abnormal or not by comparing the hot water temperatures of the hot water meters 100. For example, in a hot water meter 100 of a first individual household, a hot water meter 100 of a second individual household, and a hot water meter 100 of a third individual household, when a hot water temperature value of the hot water meter 100 of the first individual household is different from the hot water temperature values of hot water meters 100 of the other two individual households by a difference being over a range, the hot water meter abnormality determining unit 940 determines that the hot water meter 100 of the first individual household is abnormal.

Meanwhile, the hot water meter abnormality determining unit 940 determines whether the hot water meters 100 are abnormal or not by comparing the hot water temperatures of the hot water meters 100 with the supply warm water temperature or the return warm water temperature.

When the hot water temperature received from the hot water meter 100 is different from the supply warm water temperature or the return warm water temperature by a difference being over a range, the hot water meter abnormality determining unit 940 determines that the hot water meter 100 is abnormal. When the hot water temperature received from the hot water meter 100 is different from an average value of the supply warm water temperature and the return warm water temperature by a difference being over a range, the hot water meter abnormality determining unit 940 determines that the hot water meter 100 is abnormal.

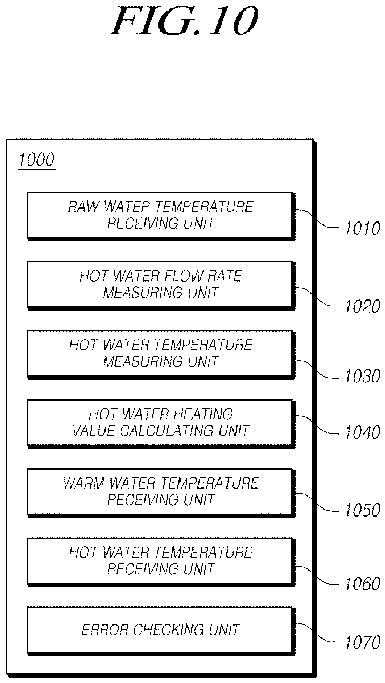

FIG. 10 is a diagram illustrating a configuration of a hot water meter according to a fifth embodiment.

Referring to FIG. 10, a hot water meter 100 includes a raw water temperature receiving unit 1010 that receives a measurement value of a raw water temperature from the raw water temperature measuring device (234 of FIG. 2) measuring the raw water temperature, a hot water flow rate measuring unit 1020 that measures a flow rate of hot water flowing through the hot water meter 1000, a hot water temperature measuring unit 1030 that measures a temperature of the hot water, and a hot water heating value calculating unit 1040 that calculates a hot water heating value by multiplying a difference value between the hot water temperature and the raw water temperature by the flow rate of the hot water.

Herein, when the raw water temperature receiving unit 1010 fails to receive the measurement value of the raw water temperature, a measurement value of the raw water temperature received by a hot water meter of another individual household is transmitted from the hot water meter of another individual household.

The hot water meter 1000 further includes a warm water temperature receiving unit 1050 that receives measurement value of a temperature of a supply warm water or a temperature of a return warm water from the warm water temperature measuring device (234 of FIG. 2) measuring at least one of the temperature of the supply warm water flowing out through a supply pipe of the heat exchanger (210 of FIG. 2) and the temperature of the return warm water flowing in through a return pipe of the heat exchanger (210 of FIG. 2), and an error checking unit 1070 that determines whether the hot water temperature measuring unit 1030 is abnormal or not by comparing the temperature of the supply warm water or the temperature of the return warm water with the hot water temperature .

The hot water meter 1000 further includes a hot water temperature receiving unit 1060 that receives a measurement value of a hot water temperature of a hot water meter of another individual household. The error checking unit 1070 determines whether the hot water temperature measuring unit 1030 is abnormal or not by comparing the measurement value of the hot water temperature of the hot water meter of another individual household with the measurement value of the hot water temperature of the hot water temperature measuring unit 1030.

As described above, according to embodiments of the present invention, there are advantages that hot water usage is exactly measured regardless a position of an individual household and the hot water usage is stably measured under an unstable network.

Further, the terms, such as "include", "constitute", or "have" described herein means that corresponding component is inherent so long as there is no special description of opposite meaning, and thus should be construed as not excluding another component but further including another component. All terms including technical terms and scientific terms should be understood to have the same meaning as what is generally construed by those skilled in the art so long as it is differently defined. General term such as terms defined in a dictionary should be construed to be equal to the meaning of a context of the related art, and should not construed as ideal or excessive formal meaning so long as it is not clearly defined in the present invention.

The foregoing description and the accompanying drawings are provided only to illustrate the technical conception of the present invention, but it will be understood by a person having ordinary skill in the art that various modifications and changes such as combinations, separations, substitutions, and alterations of the components may be made without departing from the scope of the present invention. Therefore, the exemplary embodiments of the present invention are provided for illustrative purposes only but not intended to limit the technical concept of the present invention. The scope of the technical concept of the present invention is not limited thereto . The protective scope of the present invention should be construed based on the following claims, and all the technical concepts in the equivalent scope thereof should be construed as falling within the scope of the present invention.

## Claims

1.  A hot water meter (100) installable in each individual household in a central hot water system which produces warm water by heating raw water with a heat exchanger (210) and supplies the warm water to the each individual household, the hot water meter (100) comprising:

    a raw water temperature receiving unit (110) adapted for receiving a measurement value Tcm of a temperature of the raw water via communication with a raw water temperature measuring unit, said raw water temperature measuring unit being adapted for measuring the temperature of the raw water supplied to the heat exchanger(210);
    a hot water flow rate measuring unit (130) adapted for measuring a flow rate of the hot water flowing through the hot water meter(100);
    a hot water temperature measuring unit (140) adapted for measuring a temperature of the hot water; and
    a hot water heating value calculating unit (150) adapted for calculating a heating value of the hot water by multiplying a difference value between the temperature of the hot water and the temperature of the raw water by the flow rate of the hot water, **characterized by**
    a raw water temperature estimating unit (120) adapted for estimating the temperature Tce of the raw water by using a record of the temperature of the raw water stored according to the measurement value of the temperature of the raw water which is received; wherein, when the raw water temperature receiving unit (110) fails to receive the measurement value Tcm of the temperature of the raw water, the hot water heating value calculating unit (150) calculates the heating value of the hot water by using an estimation value of the temperature of the raw water estimated by the raw water temperature estimating unit (120).

2.  The hot water meter according to claim 1, wherein the raw water temperature receiving unit (110) is also adapted for receiving the measurement value Tcm of the raw water temperature from a hot water meter (100) of another individual household via a network structure.

3.  The hot water meter according to claim 2, wherein, when the raw water temperature receiving unit (110) of the hot water meter (100) fails to communicate with the raw water temperature measuring unit of said hot water meter (100), said raw water temperature receiving unit (110) is adapted for attempting to communicate with the hot water meter of the another individual household to receive the measurement value of the temperature of the raw water, which is received by the hot water meter of the another individual household, from the hot water meter of the another individual household.

4. The hot water meter according to claims 2 or 3, further comprising an error checking unit (610) adapted for determining whether the raw water temperature received by the raw water receiving unit (110) is abnormal or not by comparing the measurement value of the temperature of the raw water which is received from the raw water temperature measuring unit with the measurement value of the temperature of the raw water which is received from the hot water meter of the another individual household.

5. The hot water meter according to claim 4, wherein, when the error checking unit (610) determines that the raw water temperature is abnormal, the hot water heating value calculating unit (150) calculates the heating value of the hot water by using an estimation value of the raw water which is estimated by the raw water temperature estimating unit (120).

6. The hot water meter according to claim 1, wherein, when the raw water temperature receiving unit (110) fails to receive the measurement value of the temperature of the raw water in an hour, the raw water temperature estimating unit estimates the temperature of the raw water by using the record of the temperature of the raw water, or
when the raw water temperature receiving unit (110) fails to receive the measurement value of the temperature of the raw water after an hour, the raw water temperature estimating unit estimates the temperature of the raw water by using timed raw water temperature data.

7. The hot water meter according to claim 6, wherein, when the raw water temperature receiving unit succeeds in receiving the measurement value of the temperature of the raw water, the raw water temperature receiving unit (110) stores the measurement value of the temperature of the raw water in the record of the temperature of the raw water, or
when the raw water temperature receiving unit (110) fails to receive the measurement value of the temperature of the raw water in an hour, the raw water temperature estimating unit (120) estimates the temperature of the raw water by using a measurement value of the temperature of the raw water stored lately in the record of the temperature of the raw water.

8. The hot water meter according to claim 1, further comprising:

a warm water temperature receiving unit (1050) that receives a measurement value of a temperature of a supply warm water or a temperature of a return warm water from a warm water temperature measuring device which measures at least one of the temperature of the supply warm water flowing through a supply pipe of the heat exchanger (210) and the temperature of the return warm water flowing through a return pipe of the heat exchanger (210), and
an error checking unit that determines whether the hot water temperature measuring unit is abnormal or not by comparing the temperature of the supply warm water or the temperature of the return warm water with the temperature of the hot water.

9. The hot water meter according to claim 1, further comprising:

a hot water temperature receiving unit adapted for receiving a measurement value of a temperature of a hot water of a hot water meter of another individual household, and
an error checking unit adapted for determining whether the hot water temperature measuring unit is abnormal or not by comparing the measurement value of the temperature of the hot water of a hot water meter of another individual household with the measurement value of the temperature of the hot water of the hot water temperature measuring unit.

10. The hot water meter according to claim 1, wherein the timed raw water temperature data includes raw water temperature data by date and time for a period of not less than one year, and
the raw water temperature estimating unit estimates the temperature of the raw water by using date and time information of a point at which the temperature of the raw water is estimated and the timed raw water temperature data.

11. A measuring method with a hot water meter (100) installed in each individual household in a central hot water system which produces warm water by heating raw water with a heat exchanger (210) and supplies the warm water to the each individual household, the measuring method comprising:

receiving a measurement value Tcm of a temperature of the raw water from a raw water temperature measuring unit (110), said raw water temperature measuring unit (110) being adapted for measuring the temperature of the raw water and storing the measurement value of the temperature of the raw water as a first variable;

measuring a temperature of the hot water flowing through the hot water meter (100) and storing the temperature of the hot water as a second variable;

measuring a flow rate of the hot water and storing the flow rate of the hot water as a third variable; and

calculating a heating value of the hot water by multiplying a difference value between the first variable and the second variable by the third variable, **characterized in that** the hot water meter further comprises a raw water temperature estimating unit (120) adapted for estimating the temperature Tce of the raw water by using a record of the temperature of the raw water stored according to the measurement value of the temperature of the raw water which is received; and

wherein, when the raw water temperature receiving unit (110) fails to receive the measurement value Tcm of the temperature of the raw water, the hot water heating value is calculated by multiplying a difference value between the measurement value Tce and the third variable by the third variable.

12. The measuring method of the hot water meter (100) according to claim 11, further comprising:

storing timed raw water temperature data;

estimating a temperature of the raw water by using the timed raw water temperature data when the first variable is not updated for a time and storing an estimation value of the temperature of the raw water as a fourth variable; and

calculating the heating value of the hot water by multiplying a difference value between the fourth variable and the second variable by the third variable.

13. The measuring method of the hot water meter (100) according to claims 11 or 12, further comprising, when the first variable is not updated for a time, receiving a measurement value of the temperature of the raw water by communicating with a hot water meter (100) of another individual household and storing the measurement value of the temperature of the raw water as the first variable.

14. The measuring method of the hot water meter (100) according to claims 11 to 13, further comprising receiving a measurement value of the temperature of the raw water from a hot water meter of another individual household, storing the measurement value of the temperature of the raw water as a fourth variable, and determining whether the hot water meter is abnormal or not by comparing the first variable with the fourth variable.

15. The measuring method of the hot water meter (100) according to claim 14, wherein, when the hot water meter (100) is determined to be abnormal in the step of determining whether the hot water meter is abnormal or not, the heating value of the hot water is calculated by replacing the first variable with the fourth variable in the step of calculating the heating value of the hot water.

**Patentansprüche**

1. Warmwasserzähler (100), der in jedem einzelnen Haushalt in einem zentralen Warmwassersystem installierbar ist, welches Warmwasser durch Erhitzen von Rohwasser mit einem Wärmetauscher (210) erzeugt und das Warmwasser den einzelnen Haushalten zuführt, wobei der Warmwasserzähler (100) umfasst:

eine Rohwassertemperatur-Empfangseinheit (110), die eingerichtet ist, einen Messwert Tcm einer Temperatur des Rohwassers per Kommunikation mit einer Rohwassertemperatur-Messeinheit zu empfangen, wobei die Rohwassertemperatur-Messeinheit zum Messen der Temperatur des dem Wärmetauscher (210) zugeführten Rohwassers eingerichtet ist,

eine Warmwasser-Durchflussraten-Messeinheit (130), die eingerichtet ist zum Messen einer Durchflussrate des durch den Warmwasserzähler (100) strömenden Warmwassers,

eine Warmwassertemperatur-Messeinheit (140), die eingerichtet ist zum Messen einer Temperatur des Warmwassers, und

eine Warmwasser-Heizwert-Berechnungseinheit (150), die eingerichtet ist zum Berechnen eines Heizwerts des Warmwassers durch Multiplizieren eines Differenzwerts zwischen der Temperatur des Warmwassers und der Temperatur des Rohwassers mit der Durchflussrate des Warmwassers,

**gekennzeichnet durch**

eine Rohwassertemperatur-Schätzeinheit (120), die eingerichtet ist zum Schätzen der Temperatur Tce des Rohwassers unter Verwendung einer Aufzeichnung der Temperatur des Rohwassers, die entsprechend dem Messwert der Temperatur des Rohwassers, der empfangen wird, gespeichert ist,

wobei, wenn die Rohwassertemperatur-Empfangseinheit (110) den Messwert Tcm der Temperatur des Rohwassers nicht empfängt, die Warmwasser-Heizwert-Berechnungseinheit (150) den Heizwert des Warmwassers unter Verwendung eines von der Rohwassertemperatur-Schätzeinheit (120) geschätzten Schätzwerts der Temperatur des Rohwassers berechnet.

2. Warmwasserzähler nach Anspruch 1, wobei die Rohwassertemperatur-Empfangseinheit (110) auch dazu eingerichtet ist, den Messwert Tcm der Rohwassertemperatur von einem Warmwasserzähler (100) eines anderen individuellen Haushalts über eine Netzwerkstruktur zu empfangen.

3. Warmwasserzähler nach Anspruch 2, wobei, wenn eine Kommunikation der Rohwassertemperatur-Empfangseinheit (110) des Warmwasserzählers (100) mit der Rohwassertemperatur-Messeinheit des Warmwasserzählers (100) fehlschlägt, die Rohwassertemperatur-Empfangseinheit (110) eingerichtet ist, zu versuchen, mit dem Warmwasserzähler des anderen individuellen Haushalts zu kommunizieren, um den Messwert der Temperatur des Rohwassers, der von dem Warmwasserzähler des anderen individuellen Haushalts empfangen wird, von dem Warmwasserzähler des anderen individuellen Haushalts zu empfangen.

4. Warmwasserzähler nach Anspruch 2 oder 3, weiterhin umfassend eine Fehlerprüfeinheit (610), die eingerichtet ist zum Bestimmen, ob die von der Rohwasser-Empfangseinheit (110) empfangene Rohwassertemperatur abnormal ist oder nicht, indem der Messwert der Temperatur des Rohwassers, der von der Rohwassertemperatur-Messeinheit empfangen wird, mit dem Messwert der Temperatur des Rohwassers, der von dem Warmwasserzähler des anderen individuellen Haushalts empfangen wird, verglichen wird.

5. Warmwasserzähler nach Anspruch 4, wobei, wenn die Fehlerprüfeinheit (610) feststellt, dass die Rohwassertemperatur abnormal ist, die Warmwasser-Heizwert-Berechnungseinheit (150) den Heizwert des Warmwassers unter Verwendung eines von der Rohwassertemperatur-Schätzeinheit (120) geschätzten Schätzwerts des Rohwassers berechnet.

6. Warmwasserzähler nach Anspruch 1, wobei
wenn die Rohwassertemperatur-Empfangseinheit (110) den Messwert der Temperatur des Rohwassers in einer Stunde nicht empfängt, die Rohwassertemperatur-Schätzeinheit die Temperatur des Rohwassers unter Verwendung der Aufzeichnung der Temperatur des Rohwassers schätzt, oder
wenn die Rohwassertemperatur-Empfangseinheit (110) den Messwert der Temperatur des Rohwassers nach einer Stunde nicht empfängt, die Rohwassertemperatur-Schätzeinheit die Temperatur des Rohwassers unter Verwendung von zeitgesteuerten Rohwassertemperaturdaten schätzt.

7. Warmwasserzähler nach Anspruch 6, wobei
wenn es der Rohwassertemperatur-Empfangseinheit gelingt, den Messwert der Temperatur des Rohwassers zu empfangen, die Rohwassertemperatur-Empfangseinheit (110) den Messwert der Temperatur des Rohwassers in der Aufzeichnung der Temperatur des Rohwassers speichert, oder
wenn die Rohwassertemperatur-Empfangseinheit (110) den Messwert der Temperatur des Rohwassers in einer Stunde nicht empfängt, die Rohwassertemperatur-Schätzeinheit (120) die Temperatur des Rohwassers unter Verwendung eines Messwerts der Temperatur des Rohwassers schätzt, der vor kurzer Zeit in der Aufzeichnung der Temperatur des Rohwassers gespeichert wurde.

8. Warmwasserzähler nach Anspruch 1, weiterhin umfassend:

eine Warmwassertemperatur-Empfangseinheit (1050), die einen Messwert einer Temperatur eines Zufuhr-Warmwassers oder einer Temperatur eines Rücklauf-Warmwassers von einer Warmwassertemperatur-Messvorrichtung empfängt, welche mindestens eine der Temperaturen des durch eine Zulaufleitung des Wärmetauschers (210) fließenden Zufuhr-Warmwassers oder des durch eine Rücklaufleitung des Wärmetauschers (210) fließenden Rücklauf-Warmwassers misst, und
eine Fehlerprüfeinheit, die bestimmt, ob die Warmwassertemperatur-Messeinheit abnormal ist oder nicht, indem sie die Temperatur des Zufuhr-Warmwassers oder die Temperatur des Rücklauf-Warmwassers mit der Temperatur des Warmwassers vergleicht.

9. Warmwasserzähler nach Anspruch 1, weiterhin umfassend:

eine Warmwassertemperatur-Empfangseinheit, die eingerichtet ist, einen Messwert einer Temperatur eines Warmwassers eines Warmwasserzählers eines anderen individuellen Haushalts zu empfangen, und
eine Fehlerprüfeinheit, die eingerichtet ist zum Bestimmen, ob die Warmwassertemperatur-Messeinheit abnormal ist oder nicht, indem der Messwert der Temperatur des Warmwassers eines Warmwasserzählers eines anderen individuellen Haushalts mit dem Messwert der Temperatur des Warmwassers der Warmwassertemperatur-Messeinheit verglichen wird.

10. Warmwasserzähler nach Anspruch 1, wobei
die zeitgesteuerten Rohwassertemperaturdaten Rohwassertemperaturdaten nach Datum und Uhrzeit für einen Zeitraum von nicht weniger als einem Jahr umfassen, und
die Rohwassertemperatur-Schätzeinheit die Temperatur des Rohwassers unter Verwendung von Datums- und Uhrzeitinformationen eines Zeitpunktes, an dem die Temperatur des Rohwassers geschätzt wird, und der zeitgesteuerten Rohwassertemperaturdaten schätzt.

11. Messverfahren mit einem Warmwasserzähler (100), der in jedem einzelnen Haushalt in einem zentralen Warmwassersystem installiert ist, welches Warmwasser durch Erhitzen von Rohwasser mit einem Wärmetauscher (210) erzeugt und das Warmwasser den einzelnen Haushalten zuführt, das Messverfahren umfassend:

Empfangen eines Messwerts Tcm einer Temperatur des Rohwassers von einer Rohwassertemperatur-Messeinheit (110), wobei die Rohwassertemperatur-Messeinheit (110) eingerichtet ist zum Messen der Temperatur des Rohwassers und zum Speichern des Messwerts der Temperatur des Rohwassers als eine erste Variable,
Messen einer Temperatur des Warmwassers, das durch den Warmwasserzähler (100) fließt, und Speichern der Temperatur des Warmwassers als eine zweite Variable,
Messen einer Durchflussrate des Warmwassers und Speichern der Durchflussrate des Warmwassers als eine dritte Variable, und
Berechnen eines Heizwerts des Warmwassers durch Multiplizieren eines Differenzwerts zwischen der ersten Variablen und der zweiten Variablen mit der dritten Variablen,

**dadurch gekennzeichnet, dass** der Warmwasserzähler ferner eine Rohwassertemperatur-Schätzeinheit (120) umfasst, die eingerichtet ist zum Schätzen der Temperatur Tce des Rohwassers unter Verwendung einer Aufzeichnung der Temperatur des Rohwassers, die entsprechend dem Messwert der Temperatur des Rohwassers, der empfangen wird, gespeichert ist, und
wobei, wenn die Rohwassertemperatur-Empfangseinheit (110) den Messwert Tcm der Temperatur des Rohwassers nicht empfängt, der Warmwasserheizwert durch Multiplizieren eines Differenzwerts zwischen dem Messwert Tce und der dritten Variablen mit der dritten Variable berechnet wird.

12. Messverfahren des Warmwasserzählers (100) nach Anspruch 11, weiterhin umfassend:

Speichern von zeitgesteuerten Rohwassertemperaturdaten,
Schätzen einer Temperatur des Rohwassers unter Verwendung der zeitgesteuerten Rohwassertemperaturdaten, wenn die erste Variable eine Zeitlang nicht aktualisiert wird, und Speichern eines Schätzwerts der Temperatur des Rohwassers als eine vierte Variable, und
Berechnen des Heizwerts des Warmwassers durch Multiplizieren eines Differenzwerts zwischen der vierten Variablen und der zweiten Variablen mit der dritten Variablen.

13. Messverfahren des Warmwasserzählers (100) nach den Ansprüchen 11 oder 12, weiterhin umfassend, wenn die erste Variable eine Zeitlang nicht aktualisiert wird, Empfangen eines Messwerts der Temperatur des Rohwassers durch Kommunizieren mit einem Warmwasserzähler (100) eines anderen individuellen Haushalts und Speichern des Messwerts der Temperatur des Rohwassers als die erste Variable.

14. Messverfahren des Warmwasserzählers (100) nach den Ansprüchen 11 bis 13, weiterhin umfassend das Empfangen eines Messwerts der Temperatur des Rohwassers von einem Warmwasserzähler eines anderen individuellen Haushalts, Speichern des Messwerts der Temperatur des Rohwassers als eine vierte Variable und Feststellen, ob der Warmwasserzähler abnormal ist oder nicht, indem die erste Variable mit der vierten Variablen verglichen wird.

**15.** Messverfahren des Warmwasserzählers (100) nach Anspruch 14, wobei, wenn in dem Schritt des Feststellens, ob der Warmwasserzähler abnormal ist oder nicht, festgestellt wird, dass der Warmwasserzähler (100) abnormal ist, der Heizwert des Warmwassers berechnet wird, indem in dem Schritt des Berechnens des Heizwerts des Warmwassers die erste Variable durch die vierte Variable ersetzt wird.

**Revendications**

**1.** Appareil de mesure d'eau chaude (100) pouvant être installé dans chaque ménage individuel dans un système d'eau chaude central qui produit de l'eau chaude en chauffant de l'eau brute avec un échangeur de chaleur (210) et qui fournit l'eau chaude à chaque ménage individuel, l'appareil de mesure d'eau chaude (100) comprenant :

une unité de réception de température d'eau brute (110) conçue pour recevoir une valeur de mesure Tcm d'une température de l'eau brute par l'intermédiaire d'une communication avec une unité de mesure de température d'eau brute, ladite unité de mesure de température d'eau brute étant conçue pour mesurer la température de l'eau brute fournie à l'échangeur de chaleur (210) ;
une unité de mesure de débit d'eau chaude (130) conçue pour mesurer un débit de l'eau chaude s'écoulant à travers l'appareil de mesure d'eau chaude (100) ;
une unité de mesure de température d'eau chaude (140) conçue pour mesurer une température de l'eau chaude ; et
une unité de calcul de valeur de chauffage d'eau chaude (150) conçue pour calculer une valeur de chauffage de l'eau chaude en multipliant une valeur de différence entre la température de l'eau chaude et la température de l'eau brute par le débit de l'eau chaude,
**caractérisé par**
une unité d'estimation de température d'eau brute (120) conçue pour estimer la température Tce de l'eau brute en utilisant un enregistrement de la température de l'eau brute mémorisé conformément à la valeur de mesure de la température de l'eau brute qui est reçue ;
dans lequel, lorsque l'unité de réception de température d'eau brute (110) ne réussit pas à recevoir la valeur de mesure Tcm de la température de l'eau brute, l'unité de calcul de valeur de chauffage d'eau chaude (150) calcule la valeur de chauffage de l'eau chaude en utilisant une valeur d'estimation de la température de l'eau brute estimée par l'unité d'estimation de température d'eau brute (120).

**2.** Appareil de mesure d'eau chaude selon la revendication 1, dans lequel l'unité de réception de température d'eau brute (110) est également conçue pour recevoir la valeur de mesure Tcm de la température d'eau brute d'un appareil de mesure d'eau chaude (100) d'un autre ménage individuel par l'intermédiaire d'une structure de réseau.

**3.** Appareil de mesure d'eau chaude selon la revendication 2, dans lequel, lorsque l'unité de réception de température d'eau brute (110) de l'appareil de mesure d'eau chaude (100) ne réussit pas à communiquer avec l'unité de mesure de température d'eau brute dudit appareil de mesure d'eau chaude (100), ladite unité de réception de température d'eau brute (110) est conçue pour tenter de communiquer avec l'appareil de mesure d'eau chaude dudit autre ménage individuel pour recevoir la valeur de mesure de la température de l'eau brute, qui est reçue par l'appareil de mesure d'eau chaude dudit autre ménage individuel, de l'appareil de mesure d'eau chaude dudit autre ménage individuel.

**4.** Appareil de mesure d'eau chaude selon la revendication 2 ou 3, comprenant en outre une unité de contrôle d'erreur (610) conçue pour déterminer si la température d'eau brute reçue par l'unité de réception d'eau brute (110) est anormale ou non en comparant la valeur de mesure de la température de l'eau brute qui est reçue de l'unité de mesure de température d'eau brute avec la valeur de mesure de la température de l'eau brute qui est reçue de l'appareil de mesure d'eau chaude dudit autre ménage individuel.

**5.** Appareil de mesure d'eau chaude selon la revendication 4, dans lequel, lorsque l'unité de contrôle d'erreur (610) détermine que la température d'eau brute est anormale, l'unité de calcul de valeur de chauffage d'eau chaude (150) calcule la valeur de chauffage de l'eau chaude en utilisant une valeur d'estimation de l'eau brute qui est estimée par l'unité d'estimation de température d'eau brute (120).

**6.** Appareil de mesure d'eau chaude selon la revendication 1, dans lequel,
lorsque l'unité de réception de température d'eau brute (110) ne réussit pas à recevoir la valeur de mesure de la température de l'eau brute dans une heure, l'unité d'estimation de température d'eau brute estime la température de l'eau brute en utilisant l'enregistrement de la température de l'eau brute, ou

lorsque l'unité de réception de température d'eau brute (110) ne réussit pas à recevoir la valeur de mesure de la température de l'eau brute après une heure, l'unité d'estimation de température d'eau brute estime la température de l'eau brute en utilisant des données de température d'eau brute programmées.

7.  Appareil de mesure d'eau chaude selon la revendication 6, dans lequel,

    lorsque l'unité de réception de température d'eau brute réussit à recevoir la valeur de mesure de la température de l'eau brute, l'unité de réception de température d'eau brute (110) mémorise la valeur de mesure de la température de l'eau brute dans l'enregistrement de la température de l'eau brute, ou

    lorsque l'unité de réception de température d'eau brute (110) ne réussit pas à recevoir la valeur de mesure de la température de l'eau brute dans une heure, l'unité d'estimation de température d'eau brute (120) estime la température de l'eau brute en utilisant une valeur de mesure de la température de l'eau brute mémorisée dernièrement dans l'enregistrement de la température de l'eau brute.

8.  Appareil de mesure d'eau chaude selon la revendication 1, comprenant en outre :

    une unité de réception de température d'eau chaude (1050) qui reçoit une valeur de mesure d'une température d'une eau chaude fournie ou d'une température d'une eau chaude renvoyée d'un dispositif de mesure de température d'eau chaude qui mesure au moins l'une de la température de l'eau chaude fournie s'écoulant à travers un tuyau d'alimentation de l'échangeur de chaleur (210) et de la température de l'eau chaude renvoyée s'écoulant à travers un tuyau de retour de l'échangeur de chaleur (210), et

    une unité de contrôle d'erreur qui détermine si l'unité de mesure de température d'eau chaude est anormale ou non en comparant la température de l'eau chaude fournie ou la température de l'eau chaude renvoyée avec la température de l'eau chaude.

9.  Appareil de mesure d'eau chaude selon la revendication 1, comprenant en outre :

    une unité de réception de température d'eau chaude conçue pour recevoir une valeur de mesure d'une température d'une eau chaude d'un appareil de mesure d'eau chaude d'un autre ménage individuel, et

    une unité de contrôle d'erreur conçue pour déterminer si l'unité de mesure de température d'eau chaude est anormale ou non en comparant la valeur de mesure de la température de l'eau chaude d'un appareil de mesure d'eau chaude d'un autre ménage individuel avec la valeur de mesure de la température de l'eau chaude de l'unité de mesure de température d'eau chaude.

10. Appareil de mesure d'eau chaude selon la revendication 1, dans lequel

    les données de température d'eau brute programmées comprennent des données de température d'eau brute par date et heure pendant une période supérieure ou égale à une année, et

    l'unité d'estimation de température d'eau brute estime la température de l'eau brute en utilisant les informations de date et d'heure d'un point auquel la température de l'eau brute est estimée et les données de température d'eau brute programmées.

11. Procédé de mesure avec un appareil de mesure d'eau chaude (100) installé dans chaque ménage individuel dans un système d'eau chaude central qui produit de l'eau chaude en chauffant de l'eau brute avec un échangeur de chaleur (210) et fournit l'eau chaude à chaque ménage individuel, le procédé de mesure comprenant :

    la réception d'une valeur de mesure Tcm d'une température de l'eau brute d'une unité de mesure de température d'eau brute (110), ladite unité de mesure de température d'eau brute (110) étant conçue pour mesurer la température de l'eau brute et mémoriser la valeur de mesure de la température de l'eau brute en tant que première variable ;

    la mesure d'une température de l'eau chaude s'écoulant à travers l'appareil de mesure d'eau chaude (100) et la mémorisation de la température de l'eau chaude en tant que deuxième variable ;

    la mesure d'un débit de l'eau chaude et la mémorisation du débit de l'eau chaude en tant que troisième variable ; et

    le calcul d'une valeur de chauffage de l'eau chaude en multipliant une valeur de différence entre la première variable et la deuxième variable par la troisième variable,

    **caractérisé en ce que**

    l'appareil de mesure d'eau chaude comprend en outre une unité d'estimation de température d'eau brute (120) conçue pour estimer la température Tce de l'eau brute en utilisant un enregistrement de la température de l'eau brute mémorisé conformément à la valeur de mesure de la température de l'eau brute qui est reçue ; et

dans lequel, lorsque l'unité de réception de température d'eau brute (110) ne réussit pas à recevoir la valeur de mesure Tcm de la température de l'eau brute, la valeur de chauffage d'eau chaude est calculée en multipliant une valeur de différence entre la valeur de mesure Tce et la troisième variable par la troisième variable.

**12.** Procédé de mesure de l'appareil de mesure d'eau chaude (100) selon la revendication 11, comprenant en outre :

la mémorisation de données de température d'eau brute programmées ;
l'estimation d'une température de l'eau brute en utilisant les données de température d'eau brute programmées lorsque la première variable n'est pas mise à jour pendant un temps et la mémorisation d'une valeur d'estimation de la température de l'eau brute en tant que quatrième variable ; et
le calcul de la valeur de chauffage de l'eau chaude en multipliant une valeur de différence entre la quatrième variable et la deuxième variable par la troisième variable.

**13.** Procédé de mesure de l'appareil de mesure d'eau chaude (100) selon la revendication 11 ou 12, comprenant en outre, lorsque la première variable n'est pas mise à jour pendant un temps, la réception d'une valeur de mesure de la température de l'eau brute en communiquant avec un appareil de mesure d'eau chaude (100) d'un autre ménage individuel et la mémorisation de la valeur de mesure de la température de l'eau brute en tant que première variable.

**14.** Procédé de mesure de l'appareil de mesure d'eau chaude (100) selon les revendications 11 à 13, comprenant en outre la réception d'une valeur de mesure de la température de l'eau brute d'un appareil de mesure d'eau chaude d'un autre ménage individuel, la mémorisation de la valeur de mesure de la température de l'eau brute en tant que quatrième variable, et la détermination si l'appareil de mesure d'eau chaude est anormal ou non en comparant la première variable avec la quatrième variable.

**15.** Procédé de mesure de l'appareil de mesure d'eau chaude (100) selon la revendication 14, dans lequel, lorsqu'il est déterminé que l'appareil de mesure d'eau chaude (100) est anormal à l'étape de détermination si l'appareil de mesure d'eau chaude est anormal ou non, la valeur de chauffage de l'eau chaude est calculée en remplaçant la première variable par la quatrième variable à l'étape de calcul de la valeur de chauffage de l'eau chaude.

# FIG.1

<u>100</u>

*FIG.2*

# FIG.3

# FIG.4

234 → Tcm → 110 → Tcm → 150

110 → Tcm → 410

410 → Tce → 120

120 → Tce → 150

# FIG.5

# *FIG.6*

# FIG.7

START

RECEIVE A RAW WATER TEMPERATURE — S702

MEASURE A HOT WATER TEMPERATURE — S704

MEASURE A HOT WATER FLOW RATE — S706

CALCULATE A HOT WATER HEATING VALUE — S708

END

# FIG.8

START

S802

YES — UPDATE A RAW WATER PARAMETER — NO

DECIDE A RAW WATER TEMPERATURE — S804

CHECK THE TIME — S806

MEASURE A HOT WATER TEMPERATURE — S812

ACCESS THE DB — S808

MEASURE A HOT WATER FLOW RATE — S814

ESTIMATE A RAW WATER TEMPERATURE — S810

CALCULATE A HOT WATER HEATING VALUE — S816

END

## FIG.9

RAW WATER TEMPERATURE → 

SUPPLY TEMPERATURE →

RETURN TEMPERATURE →

**RAW WATER TEMPERATURE TRANSMITTING UNIT** — 910

**HOT WATER HEATING VALUE RECEIVING UNIT** — 920

**HOT WATER TEMPERATURE RECEIVING UNIT** — 930

**HOT WATER METER ABNORMALITY DETERMINING UNIT** — 940

DATA 1 → ← DATA 2 — 100

DATA 1 → ← DATA 2 — 100

DATA 1 → ← DATA 2 — 100

DATA 1 → ← DATA 2 — 100

210   900

EP 3 098 575 B1

# *FIG.10*

1000

| RAW WATER TEMPERATURE RECEIVING UNIT | 1010 |

| HOT WATER FLOW RATE MEASURING UNIT | 1020 |

| HOT WATER TEMPERATURE MEASURING UNIT | 1030 |

| HOT WATER HEATING VALUE CALCULATING UNIT | 1040 |

| WARM WATER TEMPERATURE RECEIVING UNIT | 1050 |

| HOT WATER TEMPERATURE RECEIVING UNIT | 1060 |

| ERROR CHECKING UNIT | 1070 |

**EP 3 098 575 B1**

**Patent documents cited in the description**

- KR 101301687

- DE 4132399